# EUROPEAN PATENT SPECIFICATION

(11) **EP 2 728 929 B1**
(45) Date of publication and mention of the grant of the patent: **02.01.2019**
(21) Application number: 12808014.0
(22) Date of filing: 02.07.2012
(51) Int. Cl.: H04W 36/00, H04W 36/30, H04W 52/02

(54) **METHOD, DEVICE, AND SYSTEM FOR COMMUNICATIONS**
VERFAHREN, VORRICHTUNG UND SYSTEM ZUR KOMMUNIKATION
PROCÉDÉ, DISPOSITIF ET SYSTÈME DE COMMUNICATION

(30) Priority: 01.07.2011 CN 201110184346
(43) Date of publication of application: 07.05.2014
(73) Proprietor: Huawei Technologies Co., Ltd., Longgang District Shenzhen, Guangdong 518129 (CN)
(72) Inventor: GENG, Tingting, Shenzhen Guangdong 518129 (CN); ZHANG, Wei, Shenzhen Guangdong 518129 (CN); ZHANG, Shunqing, Shenzhen Guangdong 518129 (CN)
(74) Representative: Körber, Martin Hans
(86) International application number: PCT/CN2012/078056
(87) International publication number: WO 2013/004162

(56) References cited:
- EP-A1- 1 533 948
- EP-A1- 2 056 628
- EP-A1- 2 339 882
- WO-A1-2010/093298
- WO-A1-2011/041662
- CN-A- 1 805 559
- CN-A- 101 207 913
- CN-A- 101 867 982
- CN-A- 101 867 982
- CN-A- 101 931 988
- US-B1- 7 551 586

## Description

### TECHNICAL FIELD

Embodiments of the present invention relate to communications technologies, and in particular to a communications method, device, and system.

### BACKGROUND

Currently, inter-RAT (radio access technology) networks may perform overlapping coverage. The overlapping coverage of the inter-RAT networks makes a network structure more and more complex, so the maintenance cost pressure of multiple networks becomes larger, and the pressure of reducing overall power consumption of a radio network becomes increasingly larger. Therefore, an operator expects an integrated radio access network (Single Radio Access Network, Single RAN for short) to integrate radio bearers such as voice, narrowband data, and mobile broadband that are suitable for various user requirements into a network element. In the Single RAN era, a Universal Mobile Telecommunications System (Universal Mobile Telecommunications System, UMTS for short) network, a High Speed Packet Access (High Speed Packet Access, HSPA for short) network, a Long Term Evolution (Long Term Evolution, LTE for short) network, and even a radio frequency module of another standard that are superimposed and constructed on a Global System for Mobile Communications (Global System for Mobile Communications, GSM for short) network may be placed in a same base station, and a unified base station platform ensures that they may be combined randomly and share a same baseband unit. When a market requirement changes, the operator may replace a radio frequency module type according to the requirement, without having to replace a baseband. For example, CN 101 867 982 A provides a method, a terminal, a network base station and a system for processing a terminal service request in a hybrid networking system, which relate to the field of communication and are designed for solving the technical problem of complicated charging mode caused by resource sharing among networks by switching a core network in the prior art. The method of CN 101 867 982 A comprises the following steps of: receiving the service request of the terminal by a first network base station; judging whether the network base station of the terminal needs to be switched or not by the first network base station according to the service request of the terminal, and generating a judgment result; if the judgment result is so, searching a second network base station by the first network base station; switching the terminal to the second network base station by the first network base station; establishing the connection between the first network base station and the second network base station; and realizing the interaction with terminal service data by the first network base station through the connection.

However, in the Single RAN, a network-side communications device occupies considerable radio resources to broadcast system messages; and to ensure coverage, the network-side communications device always transmits at maximum power. Therefore, in the Single RAN, power consumption of the network-side communications device becomes increasingly larger. Patent application EP 2 339 882 A1 discloses that in UMTS LTE it may be sufficient for a NodeB in the "idle" state to transmit only PSS / SSS and P-BCH together with pilot symbols in association with the P-BCH transmission.

Patent application EP 1 533 948 A1 discloses that if said amount exceeds a threshold, an RNC instructs an MS to turn on a "WLAN device".

### SUMMARY

The present invention provides a communications method, and system for reducing power consumption of a network-side communications device and therefore reducing unnecessary energy waste.

The invention is set out in the appended set of claims. The embodiments and/or examples of the following description which are not covered by the appended claims are considered as not being part of the present invention. In a first aspect a communications method is provided, the method comprising: Monitoring, by a first monitoring module of a network-side communications device, whether a data service traffic of a terminal in a first network reaches a service traffic threshold, thereby determining whether the terminal in the first network has a service requirement of a second network, wherein the first network has a same coverage as the second network, an average data transmission rate of the second network is higher than an average data transmission rate of the first network, and all common physical channels or some common physical channels except a pilot channel in the second network are in disabled state; and Sending, by a first handover instructing module of the network-side communications device, a network handover instruction comprising configuration information of the second network to the terminal if the data service traffic of the terminal reaches the service traffic threshold, wherein the network handover instruction is used to instruct the terminal to hand over from the first network to the second network.

In a first implementation manner of the first aspect the sending the network handover instruction comprising configuration information of the second network to the terminal if the terminal has the service requirement of the second network comprises: sending, by a first measurement instructing unit of the network-side communications device, a first measurement instruction if the terminal has the service requirement of the second network, wherein the first measurement instruction is used to instruct the terminal to measure signal quality of the second network; and sending, by a first handover instructing unit of the network-side communications device, the network handover instruction comprising the configuration information of the second network to the terminal if a first measurement report sent by the terminal is received, wherein the first measurement report is used to give a notification that the signal quality of the second network reaches a quality threshold.

In a second implementation manner of the first asepct, before the sending the network handover instruction comprising configuration information of the second network to the terminal, further comprising: if a data service of the terminal is a dual-mode transmission service, sending by a service instruction module of the network-side communications device, the terminal an instruction for releasing a packet switched service link; or if a data service of the terminal is a packet switched service, sending by the service instruction module, a channel enabling instruction to a network-side device of the second network, wherein the channel enabling instruction is used to instruct the second network to enable a common physical channel in disabled state; and sending by the service instruction module the terminal an instruction for releasing a temporary block flow. In a second aspect a system comprising a network-side communications device, a terminal, a first network and a second network is provided,
wherein the network-side communications device is configured to perform any of the above methods.

In a communications method, device, and system according to embodiments of the present invention, when a first network and a second network have the same coverage, to reduce broadcast signaling transmission of the second network and reduce power consumption of a device of the second network, a base station of the second network disables all common physical channels except a pilot channel in the second network, and a terminal can access the first network only and initiate a service. When monitoring that the terminal has a service requirement of the second network, a network-side device of the first network sends a first network handover instruction including configuration information of the second network to the terminal, to trigger the terminal to hand over from the first network to the second network. After the terminal accesses the second network, the second network allocates a dedicated channel to the terminal, so that the terminal performs high-rate data transmission on the dedicated channel. Because the second network disables the common physical channels except the pilot channel, overhead generated by the second network by continuously transmitting broadcast signaling is avoided, and power consumption and transmit power of a second network-side communications device are reduced, thereby reducing neighboring cell interference and obtaining uplink and downlink capacity gains.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a communications method according to an embodiment of the present invention;
FIG. 2 is a flowchart of another communications method according to an embodiment of the present invention;
FIG. 3 is a flowchart of still another communications method according to an embodiment of the present invention;
FIG. 4 is a flowchart of yet another communications method according to an embodiment of the present invention;
FIG. 5 is a flowchart of yet another communications method according to an embodiment of the present invention;
FIG. 6A is a schematic structural diagram of a network-side communications device according to an embodiment of the present invention;
FIG. 6B is a schematic structural diagram of another network-side communications device according to an embodiment of the present invention;
FIG. 6C is a schematic structural diagram of still another network-side communications device according to an embodiment of the present invention;
FIG. 7A is a schematic structural diagram of yet another network-side communications device according to an embodiment of the present invention;
FIG. 7B is a schematic structural diagram of yet another network-side communications device
   according to an embodiment of the present invention;
FIG. 8A is a schematic structural diagram of a terminal according to an embodiment of the present invention;
FIG. 8B is a schematic structural diagram of another terminal according to an embodiment of the present invention;
FIG. 8C is a schematic structural diagram of a first handover instruction receiving module in FIG. 8A or FIG. 8B;
FIG. 8D is a schematic structural diagram of still another terminal according to an embodiment of the present invention; and
FIG. 9 is a schematic structural diagram of a communications system according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In different inter-RAT networks, an average transmission rate, system capacity, or the like may be different. For example, compared with a second-generation (2nd generation, 2G) network, a third-generation (3rd generation, 3G) network features a high rate, large capacity, and the like. In the embodiments of the present invention, a first network and a second network of different standards are taken as an example. Compared with the first network, the second network features a high rate, large capacity, and the like; in addition, a channel of the second network is suitable for bearing a service whose traffic is unexpected, compared with that of the first network. If data services are borne on the second network as much as possible, a user may obtain high-rate and low-delay services. However, if a large number of voice services are borne on the second network, due to a delay limit of the voice services, throughput of the second network will decrease obviously as compared with bearing data services only. Therefore, when the first network and the second network cover a cell simultaneously, in view of requirements on resource use efficiency, quality of service (QoS), and environment protection and energy saving, flexible setting may be performed based on a network feature, so that a terminal initially accesses the first network and turns to be borne on the second network when a data service requirement reaches a threshold. In the embodiments of the present invention, for example, when the second network is a fourth-generation (4th generation, 4G) network, the first network may be a 3G network or a 2G network; or when the second network is a 3G network, the first network may be a 2G network; or when the second network is a more advanced and evolved network of a 4G network, the first network may be a 4G, 3G, or 2G network. In a word, in the embodiments of the present invention, the first network and the second network are not particularly limited to a 2G, 3G, or 4G network; when a more advanced and evolved network or another inter-RAT network exists, a method provided in the embodiments of the present invention is still applicable; an average transmission rate of the second network is higher than an average transmission rate of the first network, and system capacity of the second network may also be greater than system capacity of a first system. The average transmission rate of the second network being higher than the average transmission rate of the first network refers to that in normal conditions, a transmission rate of the second network is higher than a transmission rate of the first network, or an average value of transmission rates of the second network is higher than an average value of transmission rates of the first network. In a specific condition or a transient condition, the transmission rate of the first network may be higher than the transmission rate of the second network, but this is an abnormal state. In normal conditions, the transmission rate of the second network is higher than the transmission rate of the first network, or the average transmission rate of the second network is higher than the average transmission rate of the first network. In this embodiment of the present invention, a 4G network may be, for example, an LTE or LTE advanced (LTE Advanced) network, a 3G network may be, for example, a UMTS network, and a 2G network may be, for example, a GSM network. In the embodiments of the present invention, the listed network is only a specific implementation manner and the present invention is not limited thereto. In this embodiment of the present invention, when the terminal needs to support different network standards, the terminal may be a multi-mode terminal. In the embodiments of the present invention, for division of a network of a 2G, 3G, 4G, or more advanced network standard, persons skilled in the art may refer to consensus and experience in the communications industry for confirmation.

In the embodiments of the present invention, same coverage may be co-site and co-coverage. For example, two or more inter-RAT networks with an same coverage may be integrated into one Single RAN, and modules having network-side device functions of different inter-RAT networks may be encapsulated in a single network element, where the modules having the network-side device functions may be physical modules or logical modules. The modules having the network-side device functions of different inter-RAT networks may be connected through an interface, thereby sharing information such as load of the networks and a system broadcast message. For example, a single network element may include a base station controller (Base Station Controller, BSC for short) module of a GSM network and a radio network controller (Radio Network Controller, RNC for short) module of a UMTS network, and the BSC module and the RNC module may be connected through an Iur-g interface for information sharing. Alternatively, two or more inter-RAT networks with an same coverage may be of pure co-coverage; that is, the coverage is the same, but network-side devices of different inter-RAT networks are not co-site. The Iur-g interface is an interface newly added between the BSC and the RNC and used for interoperations and information sharing of a 2G network/a 3G network. The BSC and the RNC are encapsulated as a multiple base station controller (Multiple Base Station Controller, MBSC for short) through the Iur-g interface. Interoperations of the 2G network/3G network refer to: For example, the RNC obtains load of a target cell directly from the BSC through the Iur-g interface, with no need of knowing it through a CN. Message transfer in the MBSC refers to: A 2G network cell and a 3G network cell in the MBSC broadcast their own information separately, and each network cell may receive information from another cell through the MBSC and periodically update the information. Content of broadcast information may be controlled by an operator; therefore, it is convenient to add new content, and scalability is relatively good. Whether the 2G network and the 3G network are handed over is determined by the broadcast information, instead of being determined by load; information of another cell may be known before the handover, and therefore a target cell is determined.

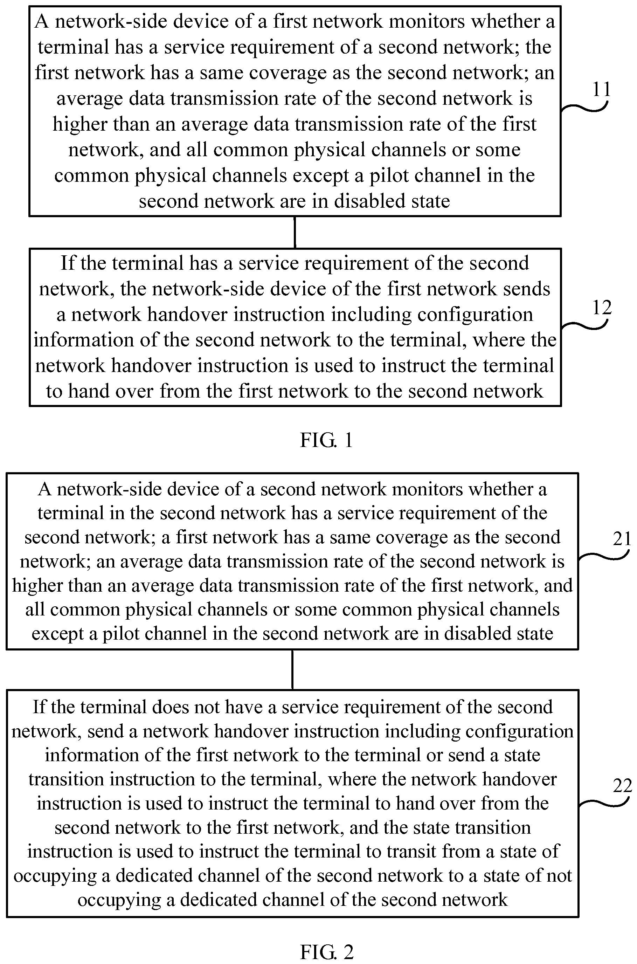

FIG. 1 is a flowchart of a communications method according to an embodiment of the present invention. As shown in FIG. 1, the communications method in an inter-RAT network according to this embodiment includes:
Step 11: A network-side device of a first network monitors whether a terminal has a service requirement of a second network; the first network has a same coverage as the second network; an average data transmission rate of the second network is higher than an average data transmission rate of the first network, and all common physical channels or some common physical channels except a pilot channel in the second network are in disabled state.

In this embodiment of the present invention, when the first network has a same coverage as the second network, a network-side device of the second network enables the pilot channel in the second network and disables all the common physical channels except the pilot channel or some common physical channels in the second network, thereby reducing transmission overhead of broadcast signaling on the network-side device of the second network. In this embodiment of the present invention, disabling some channels or all channels may be called channel tailor; when some channels or all channels in a network are in disabled state, the network may be called to be in channel tailor mode. For example, after all the common physical channels except the pilot channel or some common physical channels in the second network are disabled, the second network may be considered to be in channel tailor mode in this embodiment of the present invention. After entering the channel tailor mode, the second network does not support initial access of a terminal, residence of an idle terminal, and cell reselection of a terminal that is in the first network and whose target network is the second network. The second network cannot support initial access of a terminal; even if the signal quality of the second network is good, a newly started terminal cannot reside in. Therefore, after the second network is in channel tailor mode, a terminal can access the first network only and initiates a relevant service, for example, a paging service and a data service, at the first network. The pilot channel of the second network is in enabled state and provides a service of measuring the signal quality of the second network for the terminal.

Step 12: If the terminal has a service requirement of the second network, the network-side device of the first network sends a network handover instruction including configuration information of the second network to the terminal, where the network handover instruction is used to instruct the terminal to hand over from the first network to the second network.

After started, the terminal resides in the first network, enters a connected state, and initiates a service to the network-side device of the first network; the network-side device of the first network monitors whether the terminal has a service requirement of the second network, thereby triggering the terminal to hand over to the second network. When monitoring that the terminal has a service requirement of the second network, the network-side device of the first network sends the network handover instruction including the configuration information of the second network to trigger the terminal to hand over to the second network. The network-side device of the first network may monitor whether the terminal has a service requirement of the second network by using multiple methods, which are described in the following examples:

In an implementation manner, the network-side device of the first network monitors whether data service traffic of the terminal reaches a service traffic threshold. When the data service traffic of the terminal reaches the service traffic threshold, the terminal is determined to have a service requirement of the second network. The service traffic threshold may be determined according to an actual communications status and a communications requirement or determined according to experience of persons skilled in the art. In another implementation manner, the terminal may carry a network handover request in a service request to request handover to the second network. When receiving the service request of the terminal and monitoring that the service request carries the network handover request, the network-side device of the first network determines that the terminal has a service requirement of the second network. In still another implementation manner, the terminal may monitor its own data service traffic and send a service traffic notification message to the network-side device of the first network when the data service traffic reaches a service traffic threshold; after receiving the service traffic notification message of the terminal, the network-side device of the first network determines that the terminal has a service requirement of the second network.

For example, take that the second network is a 3G network and the first network is a 2G network as an example. States of a terminal in the 2G network include idle (idle) and connected states. When a terminal in idle state in the 2G network transits to the 3G network, the terminal is in non-CELL_DCH state. Non-CELL_DCH states of a terminal in the 3G network include idle, URA_PCH, CELL_PCH, CELL_FACH states, and the like. When a terminal in connected state in the 2G network relocates to the 3G network, the terminal is in CELL_DCH state in the 3G network. After the 3G network is in channel tailor mode, it cannot maintain a terminal in non-CELL_DCH state. However, a dedicated physical channel and a dedicated transmission channel are allocated to a terminal in CELL_DCH state, and the terminal performs data transmission on a dedicated channel, with no need of random access and no need of reading a system message. Therefore, after the 3G network is in channel tailor mode, a data service of the terminal in CELL_DCH state is not affected. As a result, the 3G network only maintains the terminal in CELL_DCH state. In this embodiment of the present invention, for the CELL_DCH state, the non-CELL_DCH state, and the states such as idle, URA_PCH, CELL_PCH, and CELL_FACH, reference may be made to description in 3GPP specifications.

After started, the terminal resides in the 2G network, and after entering the connected state, the terminal initiates a circuit switched (Circuit Switched, CS for short) service and a data service to a BSC of the 2G network, where the data service may include a packet switched (Packet Switched, PS for short) service and a dual-mode transmission (Dual Transmission Mode, DTM for short) service. The BSC monitors whether the terminal has a service requirement of the 3G network, thereby triggering the terminal to hand over to the 3G network. The BSC may monitor whether the terminal has a service requirement of the 3G network by using multiple methods, which are described in the following examples:

In an implementation manner, the BSC monitors whether data service traffic of the terminal reaches a service traffic threshold. When the data service traffic of the terminal reaches the service traffic threshold, the terminal is determined to have a service requirement of the 3G network. The service traffic threshold may be a threshold that data service traffic needs to reach when the terminal in the 3G network transits from the non-CELL_DCH state to the CELL_DCH state. In another implementation manner, the terminal may carry a network handover request in a service request to request handover to the 3G network. When receiving the service request of the terminal and monitoring that the service request carries the network handover request, the BSC determines that the terminal has a service requirement of the 3G network. In still another implementation manner, the terminal may monitor its own data service traffic and send a service traffic notification message to the BSC when the data service traffic reaches a service traffic threshold; after receiving the service traffic notification message of the terminal, the BSC determines that the terminal has a service requirement of the 3G network.

When monitoring that the terminal has a service requirement of the 3G network, the BSC sends a network handover instruction including configuration information of the 3G network to trigger the terminal to hand over to the 3G network. The configuration information of the 3G network may be acquired by interacting with a radio network controller (Radio Network Controller, RNC for short) of the 3G network when the BSC monitors that the terminal has a service requirement of the 3G network and may also be acquired when the BSC interacts with the RNC before the terminal is monitored to have a service requirement of the 3G network. After the terminal in the 2G network accesses the 3G network, the connected state in the 2G network changes to the CELL_DCH state in the 3G network, and the 3G network allocates a dedicated channel to the terminal in CELL_DCH state, so that the terminal performs high-rate data transmission on the dedicated channel. Because the 3G network only maintains the terminal in CELL_DCH state, maintenance of relevant signaling of the non-CELL_DCH state is avoided, and unnecessary power waste is reduced.

In this embodiment of the present invention, when a first network and a second network have the same coverage, to reduce broadcast signaling transmission of the second network and reduce power consumption of a device of the second network, a network-side device of the second network disables all the common physical channels except the pilot channel in the second network, and a terminal can access the first network only and initiate a service. When monitoring that the terminal has a service requirement of the second network, the network-side device of the first network sends a first network handover instruction including configuration information of the second network to the terminal, to trigger the terminal to hand over from the first network to the second network. After the terminal accesses the second network, the second network allocates a dedicated channel to the terminal, so that the terminal performs high-rate data transmission on the dedicated channel. Because the second network disables the common physical channels except the pilot channel, overhead generated by the second network by continuously transmitting broadcast signaling is avoided, and power consumption and transmit power of a second network-side communications device are reduced, thereby reducing neighboring cell interference and obtaining uplink and downlink capacity gains.

FIG. 2 is a flowchart of another communications method according to an embodiment of the present invention. As shown in FIG. 2, the communications method of an inter-RAT network according to this embodiment includes:

Step 21: A network-side device of a second network monitors whether a terminal in the second network has a service requirement of the second network; a first network has a same coverage as the second network; an average data transmission rate of the second network is higher than an average data transmission rate of the first network, and all common physical channels or some common physical channels except a pilot channel in the second network are in disabled state.

Step 22: If the terminal does not have a service requirement of the second network, send a network handover instruction including configuration information of the first network to the terminal or send a state transition instruction to the terminal, where the network handover instruction is used to instruct the terminal to hand over from the second network to the first network, and the state transition instruction is used to instruct the terminal to transit from a state of occupying a dedicated channel of the second network to a state of not occupying a dedicated channel of the second network.

After the terminal accesses the second network, the second network allocates a dedicated channel to the terminal, so that the terminal performs high-rate data transmission, relative to the first network, on the dedicated channel. When the terminal does not have a service requirement of the second network, to save radio resources of the second network, the network-side device of the second network sends the terminal a second network handover instruction, so as to instruct the terminal to hand over from the second network to and reside in the first network, and the terminal is maintained by the first network. In addition, the network-side device of the second network may also send the state transition instruction to the terminal, so as to instruct the terminal to transit from the state of occupying a dedicated channel of the second network to the state of not occupying a dedicated channel of the second network.

For example, take that the second network is a 3G network and the first network is a 2G network as an example. After the terminal accesses the 3G network, the 3G network allocates a dedicated channel to the terminal, so that the terminal enters a CELL_DCH state. The terminal in CELL_DCH state performs high-rate data transmission on the dedicated channel. An RNC simultaneously monitors whether the terminal has a service requirement of the 3G network, so as to trigger the terminal to hand over to the 2G network when the terminal does not have a service requirement of the 3G network. The RNC may monitor whether the terminal has a service requirement of the 3G network by using multiple methods, which are described in the following examples:

In an implementation manner, the RNC monitors whether service traffic of the terminal is less than a service traffic threshold and when the service traffic of the terminal is less than the service traffic threshold, determines that the terminal does not have a service requirement of the 3G network. The service traffic threshold may be a service traffic threshold when the terminal in the 3G network transits from the CELL_DCH state to a non-CELL_DCH state. In another implementation manner, the terminal may carry a network handover request in a data service request to request handover to the 2G network. When receiving the data service request of the terminal and monitoring that the data service request carries the network handover request, the RNC determines that the terminal does not have a service requirement of the 2G network. In still another implementation manner, the terminal may monitor its own service traffic and send a service traffic notification message to the RNC when the service traffic is less than a service traffic threshold; after receiving the service traffic notification message of the terminal, the RNC determines that the terminal does not have a service requirement of the 3G network.

When the terminal does not have a service requirement of the 3G network, to save radio resources of the 3G network, the RNC sends a network handover instruction to the terminal, so as to instruct the terminal to hand over from the 3G network to and reside in the 2G network, and the terminal is maintained by the 2G network. In addition, the RNC of the 3G network may also send a state transition instruction to the terminal, so as to instruct the terminal to transit to a non-connected state of the 2G network or transit to the non-CELL_DCH state of the 3G network. The terminal in non-CELL_DCH state resides in the 3G network, and when needing to be maintained by the 3G network, the terminal determines that 3G network quality is poor and triggers cell reselection to access and reside in the 2G network, because the 3G network is in channel tailor mode.

In this embodiment of the present invention, when a terminal residing in the second network does not have a service requirement of the second network, the second network instructs the terminal to transit from the state of occupying a dedicated channel of the second network to the state of not occupying a dedicated channel of the second network or instructs the terminal to hand over to the first network, so that the second network does not need to maintain a terminal with less service traffic, thereby saving the radio resources of the second network. Because the second network disables all the common physical channels except the pilot channel, overhead generated by the second network by continuously transmitting broadcast signaling is avoided, and power consumption and transmit power of a second network-side communications device are reduced, thereby reducing neighboring cell interference and obtaining uplink and downlink capacity gains.

The following embodiments take a situation where a UMTS network and a GSM network have the same coverage as an example to describe a communications method of an inter-RAT network of the present invention. In the following embodiments, a synchronization channel (Synchronization Channel, SCH for short), a common control physical channel (Common Control Physical Channel, CCPCH for short), a paging indicator channel (Paging Indicator Channel, PICH for short), an acquisition indicator channel (Acquisition Indicator Channel, AICH for short), an uplink random access channel (Packet Random Access Channel, PRACH for short) of the UMTS are in disabled state, a common pilot channel (Common Pilot Channel, CPICH for short) of the UMTS is in enabled state, and a common physical channel of the GSM is in enabled state. The CCPCH includes a primary common control physical channel (Primary Common Control Physical Channel, P-CCPCH for short) and a secondary common control physical channel (Secondary Common Control Physical Channel, S-CCPCH for short); and the CPICH includes a primary common pilot channel (Primary Common Pilot Channel, P-CPICH for short) and a secondary common pilot channel (Primary Common Pilot Channel, S-CPICH for short).

First, after the UMTS network disables the common physical channels of the UMTS network, that is, the UMTS network enters a channel tailor mode, impact on a terminal is described.

Main functions of the disabled common physical channels of the UMTS network are described as follows: The SCH channel mainly sends a synchronization message and is used for cell search and cell synchronization during initial access of the terminal. The P-CCPCH bears an upper-layer broadcast channel (Broadcast Channel, BCH for short) and mainly bears a system message. The S-CCPCH mainly bears FACH and PCH channels. The PICH is the paging indicator channel used to transfer a paging indicator (Paging Indicator, PI for short). Terminals in Idle, URA_PCH, and CELL_PCH states wake up and listen to the PI at a specified paging moment. The AICH is used to carry an acquisition indicator symbol of a network, where the indicator symbol notifies a terminal that a prefix sent through the PRACH has been detected by a system and a PRACH message can further be sent. The PRACH channel is an uplink random access physical channel. When initiating a random access process, a terminal in non-CELL_DCH state needs to send a preamble (preamble) to a UMTS terrestrial radio access network (UMTS Terrestrial Radio Access Network, UTRAN) through the PRACH channel and then listen to feedback information of the network at the AICH channel. The enabled channel P-CPICH is a pilot channel used to send a primary scrambling code of a cell and is power reference and phase reference of other physical channels; in FDD mode, measurement of signal strength and signal quality is performed for a destination cell through the CPICH based on the P-CPICH channel during reselection or handover.

According to difference of states, terminals in the UMTS network are divided into terminals in idle, URA_PCH, CELL_PCH, CELL_FACH, or CELL_DCH state. According to difference of UMTS network resource requirements of terminals in various states, in embodiments of the present invention, terminal states are divided into two categories: terminals in CELL_DCH state and terminals in non-CELL_DCH state, where the terminals in non-CELL_DCH state refer to terminals in idle, URA_PCH, CELL_PCH, and CELL_FACH states, that is, terminals in other states except the CELL_DCH state.

Impact on the terminals in non-CELL_DCH state after the common physical channels of the UMTS network are disabled: The SCH channel is disabled, a newly started terminal cannot be synchronized with a found UMTS network, and therefore the terminal cannot reside in the UMTS network; cell search continues, and it is detected that signal quality of the GSM network is good, and therefore the terminal resides in the GSM network. The PICH channel is disabled, and the terminals in non-CELL_DCH state reside in the UMTS network and need to periodically wake up and listen to the PICH at their respective paging moments, so as to check whether there is paging of a local group (paging group in which a terminal is located); the PICH channel is disabled, a terminal in non-CELL_DCH state cannot find the PICH when listening to the PICH at a paging moment, and therefore the terminal thinks that the UMTS network becomes faulty and triggers cell reselection; the CCPCH channel is disabled, the P-CCPCH bears system information, the terminals in non-CELL_DCH state need to read the system information, and there are two main reading manners: one is when a system message changes, and the second is that a system message is automatically re-read after a system message stored by a terminal expires; after the CCPCH is disabled, a terminal cannot obtain a system message, and therefore thinks that a cell is a faulty cell (barred cell) and triggers cell reselection. Therefore, when the UMTS network disables the SCH/CCPCH/PICH/AICH/PRACH and enters the channel tailor mode, behaviors such as initial access, cell residence, measurement, handover, and service initiation of a terminal are affected.

For the terminals in CELL_DCH state, a dedicated physical channel, a dedicated transmission channel, and a dedicated logical channel are allocated to a terminal. The dedicated logical channel includes a dedicated control channel (Dedicated Control Channel, DCCH for short) and a dedicated traffic channel (Dedicated Traffic Channel, DTCH for short). The terminal performs data transmission on the dedicated transmission channel, does not need random access, and does not need to listen to the AICH for listening to an AI. The terminal does not need to read a system message, an RNC successively delivers various configuration or bearing signaling in a dedicated channel when configuration information of a resident cell changes, and the configuration or bearing signaling is finally configured to the terminal. If the UTRAN needs to page a terminal in CELL_DCH state, it sends Paging Type2 information (the Paging Type2 information is used to page the terminal in CELL_DCH state) to the terminal on the DCCH, the dedicated channel (Dedicated Channel, DCH for short), and a dedicated physical data channel (Dedicated Physical Control Channel, DPDCH for short), instead of needing to listen to the PICH and CCPCH. Therefore, after the UMTS network enters the channel tailor mode, service transmitting and receiving of the terminal in CELL_DCH state are not affected. If the terminal in CELL_DCH state fails to be synchronized in a serving cell, it will change to the CELL_FACH state. As can be seen from the above analysis, after the UMTS network enters the channel tailor mode, the UMTS network cannot maintain a terminal in non-CELL_DCH state, and therefore the terminal reselects the GSM network.

Regardless of whether the UMTS network is in channel tailor mode, the CPICH channel is enabled normally. When signal quality of a cell needs to be measured, the P-CPICH channel can complete the measurement independently. For a mobility aspect of the terminal in CELL_DCH state, soft/hard handover between cells of the UMTS network is considered first. Before performing handover, the terminal needs to perform signal quality measurement for a target cell of the handover. The UTRAN delivers a measurement control (Measurement Control) message to the terminal in CELL_DCH state on the DCCH. Regardless of whether the target cell is in channel tailor mode, the CPICH channel is enabled normally. To complete the soft/hard handover, the terminal in CELL_DCH state only requires the P-CPICH channel to support completion of relevant measurement of the target cell. For network configuration information of the target cell, a source RNC sends relevant configuration to a terminal in CELL_DCH state that requires handover, the terminal may directly hand over to the target cell after getting the configuration information of the target cell, and the entire process does not require support from another physical channel of the target cell. Therefore, regardless of a source cell or the target cell of the handover, as long as the CPICH channel is reserved to provide measurement support for the terminal in CELL_DCH state, a handover behavior of the terminal will not be affected.

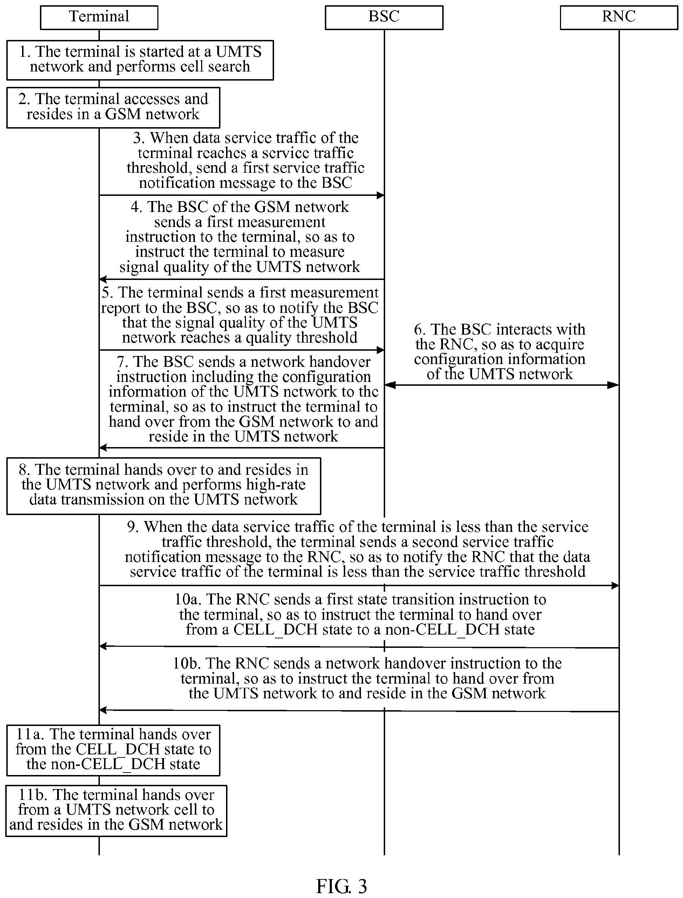

FIG. 3 is a flowchart of still another communications method according to an embodiment of the present invention. This embodiment describes that in a scenario where a UMTS network and a GSM network have the same coverage, for a CS service, how a BSC of the GSM network and an RNC of the UMTS network perform network handover for a terminal.

As shown in FIG. 3, this embodiment includes:

First, in a same coverage area of the UMTS network and the GSM network, a cell of the GSM network and a cell of the UMTS network are configured as neighboring cells for each other. In an inter-system neighboring cell list of a GSM system message, the cell of the UMTS network is configured as a neighboring cell, and the list includes the following information: a UMTS cell ID, a cell bandwidth, frequency information, and the like. An intra-frequency/inter-frequency (Intra/Inter-freq) neighboring cell list in system information or measurement control information of the UMTS network also includes information such as a cell ID, a primary scrambling code, and a frequency; an Inter-RAT neighboring cell list includes relevant information of a GSM cell: a cell offset (Cell individual offset), a bandwidth indicator (Band indicator), a broadcast control channel (Broadcast Control Channel, BCCH for short), an absolute radio frequency channel number (Absolute Radio Frequency Channel Number - ARFCN), and the like. The UMTS network disables SCH, CCPCH, PICH, AICH, and PRACH channels, enables a CPICH channel, and is in low power consumption mode. A common physical channel of the GSM network is in enabled state.

Step 1: A terminal is started at a UMTS network and performs cell search.

Step 2: The terminal accesses and resides in a GSM network.

When the terminal of the UMTS network wakes up and performs network search, because the SCH, CCPCH, PICH, AICH, and PRACH channels of the UMTS network are in disabled state, the terminal cannot reside in the UMTS network even if it detects that signal quality of the UMTS network is good. Therefore, the terminal can only reside in the GSM network that is with the same coverage and is running normally and initiate a service at the GSM network.

Step 3: When data service traffic of the terminal reaches a service traffic threshold, send a first service traffic notification message to a BSC of the GSM network.

Step 4: The BSC of the GSM network sends a first measurement instruction to the terminal, so as to instruct the terminal to measure signal quality of the UMTS network.

Step 5: The terminal sends a first measurement report to the BSC, so as to notify the BSC that the signal quality of the UMTS network reaches a quality threshold.

Due to normal sending of a P-CPICH channel of the UMTS network, measuring, by the terminal, the signal quality of the UMTS network is not affected.

In addition to solutions adopted in step 5 and step 6, the BSC may also periodically send a measurement instruction to the terminal; when measuring that the signal quality of the UMTS network reaches the quality threshold, the terminal sends a measurement report to the BSC, and the BSC decides whether to hand over a network in which the terminal resides.

Step 6: The BSC interacts with an RNC of the UMTS network, so as to acquire configuration information of the UMTS network.

Step 7: The BSC sends a network handover instruction including the configuration information of the UMTS network to the terminal, so as to instruct the terminal to hand over from the GSM network to and reside in the UMTS network.

After the terminal reports "cell quality of the UMTS network reaches the quality threshold" to the GSM network, the BSC of the GSM network interacts with the RNC of the UMTS network to acquire the configuration information of the UMTS network and sends the network handover instruction including the configuration information of the UMTS network to the terminal.

Same coverage of the UMTS network and the GSM includes two coverage manners: one is that the UMTS network and the GSM are co-site and co-coverage, and the other is that the UMTS network and the GSM are of pure co-coverage. When the UMTS network and the GSM are co-site and co-coverage, the UMTS network and the GSM have the same coverage; in a same site, the BSC of the GSM network and the RNC of the UMTS network are encapsulated in one hardware apparatus and are connected through an Iur-g, so as to share some information, such as load of the networks and a system broadcast message. When the UMTS network and the GSM are of pure co-coverage, the UMTS network and the GSM have the same coverage; however, whether base stations share a site is not considered, and the Iur-g interface does not exist.

For a condition where the UMTS network and the GSM are co-site and co-coverage, after the terminal reports "quality of a UMTS network cell reaches the quality threshold" to the GSM network, the BSC of the GSM network performs handover interaction with the RNC of the UMTS network through the Iur-g interface, the RNC of the UMTS network packs configuration information, that is, a U-RNTI, radio bearer (Radio Bearer, RB for short) information, radio access bearer (Radio Access Bearer, RAB for short) information, transport layer information, and physical layer information, of the UMTS network cell and forwards the configuration information to the BSC of the GSM network through the Iur-g interface, and then the BSC of the GSM network delivers the configuration information to the terminal through a handover command (handover command). According to the configuration information of the UMTS network that is transferred through the HO Command, the terminal initializes a signaling link, an RB, a transmission channel, and a physical channel. According to a received information element "maximum allowed uplink transmission power (Maximum allowed UL TX power)", the terminal performs open-loop evaluation to determine transmit power of an uplink link and hands over from a connected state of the GSM network to a CELL_DCH state of the UMTS network.

For a condition where the UMTS network and the GSM are of pure co-coverage, the BSC of the GSM network interacts with the RNC of the UMTS network through a core network (Core Network, CN for short) to acquire the configuration information of the UMTS network. It may be as follows: When deciding that the terminal should hand over to the UMTS network cell, the BSC of the GSM network initiates a handover request to the CN. Then, an MSC sends a radio access network application part relocation request (Radio Access Network Application Part relocation request, RANAP relocation Req) message to the RNC.

The RNC receives the RANAP relocation Req message, allocates radio resources for this relocation, configures a base station through a radio link setup (Radio Link setup, RL setup) process, and the base station begins to transmit and receive a radio signal. The base station successfully sets up an RL and returns a radio link setup response (RL setup response) message.

The RNC carries radio resources and another parameter group (mainly including the U-RNTI, the RAB information, the transport layer information, and the physical layer information) allocated to the terminal in a relocation request acknowledgment (RELOCATION REQ ACKNOWLEGE) message (in an RNC container (RNC Container) information element) and forwards them to the BSC through the Iur-g interface and the CN, and the BSC delivers the radio resources and parameter group to the terminal. According to a default parameter identifier configured by the RNC, the terminal acquires a relevant access parameter from pre-configuration (a default manner) provided in a system message, performs downlink synchronization directly with the base station, and performs uplink radio sending after the synchronization.

After detecting uplink synchronization, the base station reports a radio link restore indicator (radio link restore indicator, RL RESTORE IND) to the RNC. After receiving the "RL RESTORE IND message" reported by the base station, the RNC sends a relocation detection (relocation detect) message to the core network, so as to notify that the terminal has accessed the UMTS network from the GSM network. The terminal sends a handover to UTRAN complete (handover to UTRAN complete) message to the RNC, so as to indicate that terminal handover is complete. The message may further include an encrypted sequence number of each CN domain and its activation time.

Step 8: The terminal hands over to and resides in the UMTS network and performs high-rate data transmission on the UMTS network.

After the terminal accesses the UMTS network, the UMTS network allocates a dedicated channel to the terminal, so that the terminal enters the CELL_DCH state. The terminal in CELL_DCH state performs high-rate data transmission on the dedicated channel.

Step 9: When the data service traffic of the terminal is less than the service traffic threshold, the terminal sends a second service traffic notification message to the RNC, so as to notify the RNC that the data service traffic of the terminal is less than the service traffic threshold.

After handing over to and residing in the UMTS network, the terminal may periodically measure its own service traffic; when the service traffic is less than a second service traffic threshold, the terminal sends the second service traffic notification message to the RNC.

Step 10a: The RNC sends a state transition instruction to the terminal, so as to instruct the terminal to hand over from a CELL_DCH state to a non-CELL_DCH state.

Step 11a: The terminal hands over from the CELL_DCH state to the non-CELL_DCH state.

For the terminal that transits out of the CELL_DCH state, the UMTS network does not maintain the terminal any longer. When the terminal requires a service of the UMTS network to maintain its state on the UMTS network, because the UMTS network is in channel tailor mode, the terminal thinks that the UMTS network has a quality problem and triggers cell reselection to access the GSM network. For example, when the terminal periodically reads a paging message, because the PICH is disabled and the terminal cannot find the PICH channel, the terminal determines that the UMTS network quality deteriorates and triggers cell reselection.

In addition, after step 9, the RNC may also instruct the terminal to hand over from the UMTS network to and reside in the GSM network. It may be as follows:

Step 10b: The RNC sends a network handover instruction including configuration information of the GSM network to the terminal, so as to instruct the terminal to hand over from the UMTS network to and reside in the GSM network.

For example, the RNC sends a handover command, that is, a cell change (Cell Change) command, for handover to the GSM network to the terminal. Through the method provided in step 10b, signaling for the terminal to perform state transition in the UMTS network, signaling for the terminal to reselect the GSM network, and signaling for the terminal to reside in the GSM network may be reduced.

Step 11b: The terminal hands over from the UMTS network to and resides in the GSM network.

After the terminal in CELL_DCH state hands over from the UMTS network to and resides in the GSM network, if the service traffic reaches the service traffic threshold, the terminal hands over back to the UMTS network through step 3 to step 7.

In this embodiment, when the GSM network and the UMTS network have the same coverage, for the purpose of reducing transmission of broadcast signaling of the UMTS network and reducing power consumption of a device of the UMTS network, all common physical channels except a pilot channel in the UMTS network are disabled; as a result, the UMTS network cannot support access of a terminal in non-CELL_DCH state, and the UMTS network can only maintain a terminal in CELL_DCH state. During initial access, the terminal accesses the GSM network. When service traffic of a data service of a terminal in connected state in the GSM network reaches the service traffic threshold, the GSM network makes the terminal hand over to the CELL_DCH state in the UMTS network. After the terminal enters the CELL_DCH state of the UMTS network, the UMTS network allocates a dedicated channel to the terminal, so that the terminal performs high-rate data transmission on the dedicated channel. When the service traffic of the terminal decreases, the RNC of the UMTS network instructs the terminal to hand over to the non-CELL_DCH state or instruct the terminal to hand over to the GSM network; therefore, the UMTS network does not need to maintain a terminal with less service traffic, thereby saving radio resources of the UMTS network. Because the UMTS network disables all the common physical channels except the pilot channel, overhead generated by the UMTS network by continuously transmitting broadcast signaling is avoided, and power consumption and transmit power of a network-side communications device of the UMTS network are reduced.

In this embodiment of the present invention, seamless handover from the GSM network to the UMTS network can be implemented for a CS service. In this embodiment of the present invention, in normal conditions, the CS service is borne on the GSM network, and a PS service and a DTM service are borne on a 3G network. The following uses two embodiments to describe how a terminal having a PS service and a terminal of a DTM service perform network handover between the GSM network and the UMTS network.

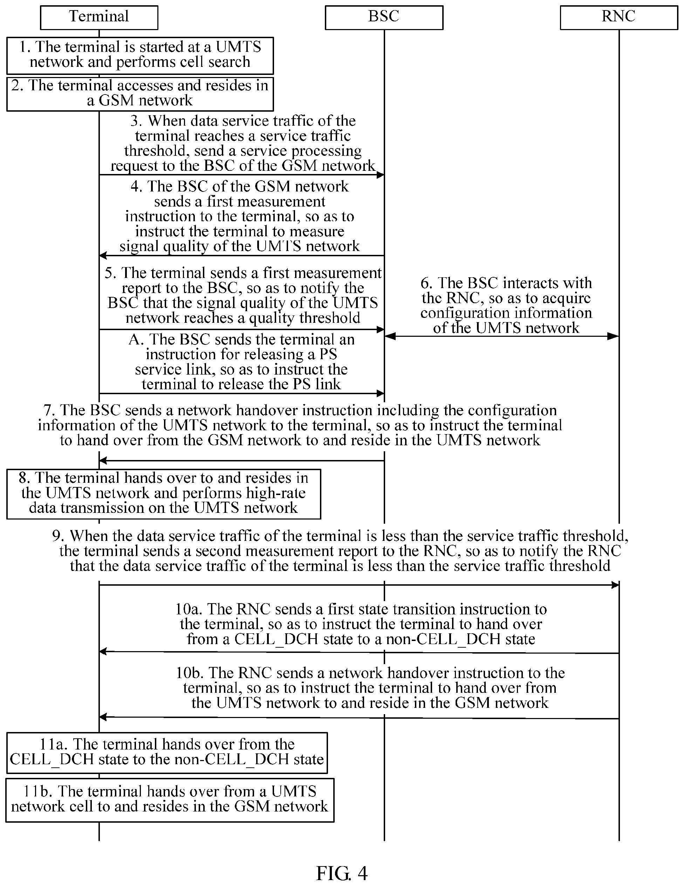

FIG. 4 is a flowchart of yet another communications method according to an embodiment of the present invention. This embodiment describes that in a scenario where a UMTS network and a GSM network have the same coverage, for a terminal of a DTM service, that is, a terminal of mixed CS and PS services, how a BSC of the GSM network and an RNC of the UMTS network perform network handover for the terminal. As shown in FIG. 4, a difference between network handover for the DTM service and a network handover method of a CS service lies in that: before step 7 of sending, by the BSC, a network handover instruction including configuration information of the UMTS network to the terminal in the embodiment corresponding to FIG. 3, the method further includes:

Step A: The BSC sends the terminal an instruction for releasing a PS service link, so as to instruct the terminal to release the PS link.

Currently, a pure PS service of a 2G network cannot be directly handed over to a 3G network. Therefore, to hand over to a 3G service when the terminal performs a pure PS service, the terminal needs to disconnect a connection between the PS service and the 2G network and then reselect and access the 3G network. However, a CS service of the 2G network can be directly handed over to the 3G network. Therefore, for the terminal of the DTM service, before sending the network handover instruction including the configuration information of the UMTS network to the terminal, the BSC needs to instruct the terminal to release the PS service link.

After releasing the PS service link at the GSM network, the terminal can implement seamless handover from the GSM network to the UMTS network through subsequent steps of step 7.

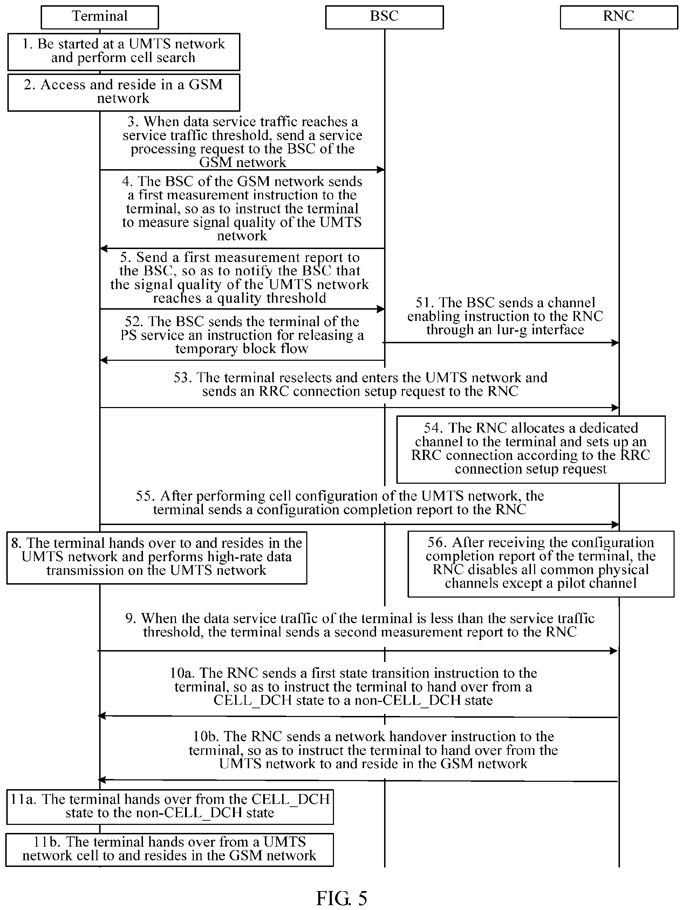

FIG. 5 is a flowchart of yet another communications method according to an embodiment of the present invention. This embodiment describes that in a scenario where a UMTS network and a GSM network have the same coverage, for a terminal of a PS service, how a BSC of the GSM network and an RNC of the UMTS network perform network handover for the terminal. As shown in FIG. 5, a main difference between network handover of the PS service and network handover of a CS service lies in step 6 to step 8 in the embodiment corresponding to FIG. 3, that is, how the BSC instructs the terminal to hand over to the UMTS network.

As shown in FIG. 5, a difference between FIG. 5 and FIG. 3 lies in that after step 5 and before step 9, this embodiment includes:

Step 51: The BSC sends a channel enabling instruction to the RNC through an Iur-g interface, so as to trigger the UMTS network to enable a disabled common physical channel.

After the terminal reports "quality of a UMTS network cell is the best" information to the GSM network, the GSM network sends identifier information of the terminal to the UMTS network; after the UMTS network is triggered, through the Iur-g interface, to enable the disabled common physical channel, the UMTS network enters a normal running mode from a channel tailor mode. When the terminal hands over from the GSM network to the UMTS network, the GSM network needs to report the identifier information of the terminal to the UMTS network.

Step 52: The BSC sends the terminal of the PS service an instruction for releasing a temporary block flow (Temporary Block Flow, TBF for short).

Currently, a pure PS service of a 2G network cannot be directly handed over to a 3G network; when handing over to the 3G network, a terminal of a pure PS service needs to disconnect a connection between the PS service and the 2G network and then reselect and access the 3G network. Therefore, for a terminal of a DTM service, the connection between the PS service and the 2G network needs to be released first, and only a connection between the CS service and the 2G network is reserved.

Step 53: The terminal reselects and accesses the UMTS network and sends an RRC connection setup request to the RNC of the UMTS network.

The terminal releases the TBF at the GSM network; because the UMTS network is already in normal running mode and the signal quality of the UMTS network is the best, the terminal reselects and accesses the UMTS network.

Step 54: The RNC allocates a dedicated channel to the terminal and sets up an RRC connection according to the RRC connection setup request.

Step 55: After performing cell configuration of the UMTS network, the terminal sends a configuration completion report to the RNC.

Step 56: After receiving the configuration completion report of the terminal, the RNC disables all common physical channels except a pilot channel.

The terminal completes configuration of a new cell and reports the configuration completion report to the UMTS network, so as to trigger the UMTS network to disable an enabled physical channel and enter the channel tailor mode.

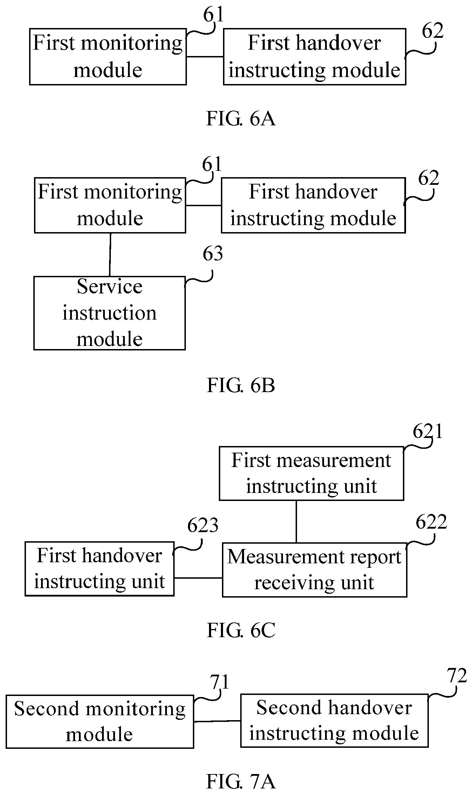

FIG. 6A is a schematic structural diagram of a network-side communications device according to an embodiment of the present invention. As shown in FIG. 6A, a network-side communications device of a first network according to this embodiment includes a first monitoring module 61 and a first handover instructing module 62.

The first monitoring module 61 is configured to monitor whether a terminal in the first network has a service requirement of a second network, where the first network has a same coverage as the second network, an average data transmission rate of the second network is higher than an average data transmission rate of the first network, and all common physical channels or some common physical channels except a pilot channel in the second network are in disabled state.

The first handover instructing module 62 is configured to send a network handover instruction including configuration information of the second network to the terminal when the first monitoring module 61 monitors that the terminal has a service requirement of the second network, where the first network handover instruction is used to instruct the terminal to hand over from the first network to the second network.

In an implementation manner, the first monitoring module 61 may be configured to monitor whether data service traffic of the terminal reaches a service traffic threshold. The first handover instructing module 62 may be configured to send the network handover instruction including the configuration information of the second network to the terminal when the data service traffic of the terminal reaches the service traffic threshold.

In another implementation manner, the first monitoring module 61 may be configured to monitor whether a data service request of the terminal carries a first network handover request, where the second network handover request is used to request handover to the second network. The first handover instructing module 62 may be configured to send the network handover instruction including the configuration information of the second network to the terminal when the service request of the terminal carries the second network handover request.

In still another implementation manner, the first monitoring module 61 may be configured to monitor whether a first service traffic notification message sent by the terminal is received, where the first service traffic notification message is used to give a notification about whether data service traffic of the terminal reaches a service traffic threshold. The first handover instructing module 62 may be configured to send the network handover instruction including the configuration information of the second network to the terminal when the first service traffic notification message sent by the terminal is received.

For a function implemented by the network-side device shown in FIG. 6A, reference may be made to description about the network-side device of the first network in the embodiment corresponding to FIG. 1.

Further, as shown in FIG. 6B, based on FIG. 6A, a service instruction module 63 may further be included.

The service instruction module 63 is configured to: before the network handover instruction including the configuration information of the second network is sent to the terminal, if a service of the terminal is a DTM service, send the terminal an instruction for releasing a PS service link; if the service of the terminal is a PS service, send a channel enabling instruction to a network-side device of the second network, where the channel enabling instruction is used to instruct the network-side device of the second network to enable a common physical channel of the second network in disabled state; and send the terminal an instruction for releasing a temporary block flow.

For the network-side device shown in FIG. 6B, reference may be made to BSC-related description in the embodiments corresponding to FIG. 3, FIG. 4, and FIG. 5.

In addition, as shown in FIG. 6C, the first handover instructing module 62 includes a first measurement instructing unit 621, a measurement report receiving unit 622, and a first handover instructing unit 623.

The first measurement instructing unit 621 is configured to send a first measurement instruction to the terminal when the first monitoring module 61 monitors that the terminal has a service requirement of the second network, where the first measurement instruction is used to instruct the terminal to measure signal quality of the second network.

The measurement report receiving unit 622 is configured to receive a first measurement report sent by the terminal, where the first measurement report is used to give a notification that the signal quality of the second network reaches a quality threshold.

The first handover instructing unit 623 is configured to send the network handover instruction including the configuration information of the second network to the terminal when the first measurement report sent by the terminal is received.

For a function implemented by the network-side device shown in FIG. 6C, reference may be made to BSC-related description in the embodiment corresponding to FIG. 3.

In this embodiment of the present invention, when a first network and a second network have the same coverage, to reduce broadcast signaling transmission of the second network and reduce power consumption of a device of the second network, a base station of the second network disables all common physical channels except a pilot channel in the second network, and a terminal can access the first network only and initiate a service. When the first monitoring module 61 of the network-side device of the first network monitors that the terminal has a service requirement of the second network, the first handover instructing module 62 sends the terminal a first network handover instruction, including configuration information of the second network, to trigger the terminal to hand over from the first network to the second network. After the terminal accesses the second network, the second network allocates a dedicated channel to the terminal, so that the terminal performs high-rate data transmission on the dedicated channel. Because the second network disables the common physical channels except the pilot channel, overhead generated by the second network by continuously transmitting broadcast signaling is avoided, and power consumption and transmit power of a second network-side communications device are reduced, thereby reducing neighboring cell interference and obtaining uplink and downlink capacity gains.

FIG. 7A is a schematic structural diagram of yet another network-side communications device according to an embodiment of the present invention. As shown in FIG. 7A, this embodiment includes a second monitoring module 71 and a second handover instructing module 72.

The second monitoring module 71 is configured to monitor whether a terminal in a second network has a service requirement of the second network, where a first network has a same coverage as the second network, an average data transmission rate of the second network is higher than an average data transmission rate of the first network, and all common physical channels or some common physical channels except a pilot channel in the second network are in disabled state.

The second handover instructing module 72 is configured to: when the terminal does not have a service requirement of the second network, send a network handover instruction including configuration information of the first network to the terminal or send a state transition instruction to the terminal, where the network handover instruction is used to instruct the terminal to hand over from the second network to the first network, and the state transition instruction is used to instruct the terminal to transit from a state of occupying a dedicated channel of the second network to a state of not occupying a dedicated channel of the second network.

In an implementation manner, the second monitoring module may be configured to monitor whether data service traffic of the terminal is less than a service traffic threshold.

The second handover instructing module may be configured to send the network handover instruction including the configuration information of the first network to the terminal or send the state transition instruction to the terminal when the data service traffic of the terminal is less than the service traffic threshold.

In an implementation manner, the second monitoring module may be configured to monitor whether a data service request of the terminal carries a first network handover request, where the second network handover request is used to request handover to the first network. When the service request of the terminal carries the first network handover request, a second network handover instruction, including the configuration information of the first network, is sent to the terminal, or the state transition instruction is sent to the terminal.

In an implementation manner, the second monitoring module may be configured to monitor whether a second service traffic notification message sent by the terminal is received, where the second service traffic notification message is used to give a notification that data service traffic of the terminal is less than a service traffic threshold. The second handover instructing module may be configured to send the network handover instruction including the configuration information of the first network to the terminal or send the state transition instruction to the terminal when the second service traffic notification message sent by the terminal is received.

For a function implemented by the network-side device shown in FIG. 7A, reference may be made to description relevant to the network-side device of the second network in the embodiment corresponding to FIG. 2.

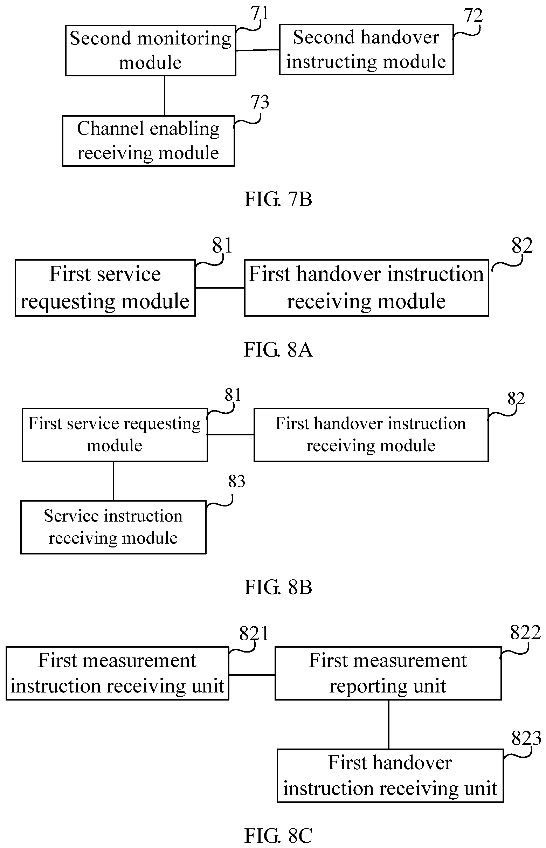

Further, as shown in FIG. 7B, based on FIG. 7A, a channel enabling receiving module 73 may further be included.

The channel enabling receiving module 73 is configured to: before a network-side device of the first network sends a network handover instruction including configuration information of the second network to the terminal, if a data service of the terminal is a pure packet switched domain service, receive a channel enabling instruction sent by the network-side device of the first network, where the channel enabling instruction is used to give an instruction for enabling a common physical channel of the second network in disabled state; and the network handover instruction is used to instruct the terminal to hand over from the first network to the second network.

For a function implemented by the network-side device shown in FIG. 7B, reference may be made to RNC-related description in the embodiment corresponding to FIG. 5.

In this embodiment of the present invention, when the second monitoring module 71 monitors that a terminal residing in the second network does not have a service requirement of the second network, the second handover instructing module 72 instructs the terminal to transit from the state of occupying a dedicated channel of the second network to the state of not occupying a dedicated channel of the second network or instructs the terminal to hand over to the first network, so that the second network does not need to maintain a terminal with less service traffic, thereby saving radio resources of the second network. Because the second network disables all the common physical channels except the pilot channel, overhead generated by the second network by continuously transmitting broadcast signaling is avoided, and power consumption and transmit power of a second network-side communications device are reduced, thereby reducing neighboring cell interference and obtaining uplink and downlink capacity gains.

An embodiment of the present invention further provides a base station. The base station is located in a second network; when a first network has a same coverage as the second network, the base station disables all common physical channels or some common physical channels except a pilot channel in the second network; and an average data transmission rate of the second network is higher than that of the first network.

FIG. 8A is a schematic structural diagram of a terminal according to an embodiment of the present invention. As shown in FIG. 8A, this embodiment includes a first service requesting module 81 and a first handover instruction receiving module 82.

The first service requesting module 81 is configured for the terminal to send, in a first network, a first service request to a network-side device of the first network, where an average data transmission rate of a second network is higher than an average data transmission rate of the first network, and all common physical channels or some common physical channels except a pilot channel in the second network are in disabled state.

The service request may include a network handover request, where the network handover request is used to request handover to the second network. When the service request including the network handover request is received, the terminal is determined to have a service requirement of the second network. In addition, the terminal may further include a first service traffic notification module. The first service traffic notification module is configured to send a first service traffic notification message to the network-side device of the first network when monitoring that data service traffic of the terminal reaches a service traffic threshold, where the first service traffic notification message is used to notify the network-side device of the first network that the data service traffic of the terminal reaches the service traffic threshold. When receiving the first service traffic notification message, the network-side device of the first network determines that the terminal has a service requirement of the second network.

The first handover instruction receiving module 82 is configured to receive a network handover instruction that is sent by the network-side device of the first network and includes configuration information of the second network when the terminal has a service requirement of the second network, where the network handover instruction is used to instruct the terminal to hand over from the first network to the second network.

As shown in FIG. 8B, based on FIG. 8A, this embodiment further includes a service instruction receiving module 83, configured to: before the network handover instruction sent by the network-side device of the first network is received, if a data service of the terminal is a dual-mode transmission service, receive an instruction that is sent by the network-side device of the first network and used for releasing a circuit switched service link; or if a data service of the terminal is a pure circuit switched service, receive an instruction that is sent by the network-side device of the first network and used for releasing a temporary block flow.

FIG. 8C is a schematic structural diagram of the first handover instruction receiving module in FIG. 8A or FIG. 8B. As shown in FIG. 8C, the first handover instruction receiving module 82 includes a first measurement instruction receiving unit 821, a first measurement reporting unit 822, and a first handover instruction receiving unit 823.

The first measurement instruction receiving unit 821 is configured to receive a first measurement instruction sent by the network-side device of the first network when the terminal has a service requirement of the second network, where the first measurement instruction is used to instruct the terminal to measure signal quality of the second network.

The first measurement reporting unit 822 is configured to send a first measurement report to the network-side device of the first network when it is measured that the signal quality of the second network reaches a quality threshold, where the first measurement report is used to give a notification that the signal quality of the second network reaches the quality threshold.

The first handover instruction receiving unit 823 is configured to receive the network handover instruction that is sent by the network-side device of the first network and includes the configuration information of the second network.

The terminal provided in this embodiment of the present invention accesses the first network and sends the service request to the network-side device of the first network through the first service requesting module 81 in the first network. When the network-side device of the first network monitors that the terminal has a service requirement of the second network, the first handover instruction receiving module 82 receives the network handover instruction that is sent by the network-side device of the first network and includes the configuration information of the second network, and the terminal hands over from the first network to and resides in the second network according to the instruction, thereby performing high-speed data transmission on the second network.

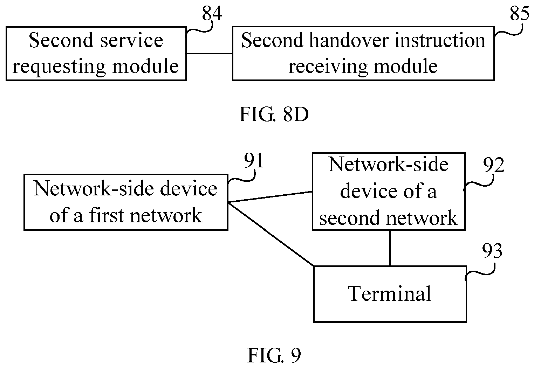

FIG. 8D is a schematic structural diagram of still another terminal according to an embodiment of the present invention. As shown in FIG. 8D, the terminal provided in this embodiment includes a second service requesting module 84 and a second handover instruction receiving module 85.

The second service requesting module 84 is configured for the terminal to send, in a second network, a service request to a network-side device of the second network, where an average data transmission rate of the second network is higher than an average data transmission rate of a first network, and all common physical channels or some common physical channels except a pilot channel in the second network are in disabled state.

The service request may include a network handover request, where the network handover request is used to request handover to the first network. When receiving the service request including the network handover request, the network-side device of the second network determines that the terminal does not have a service requirement of the second network. In addition, a second service traffic notification module may further be included. The second service traffic notification module is configured to send a second service traffic notification message to a radio network controller when monitoring that data service traffic of the terminal is less than a service traffic threshold, where the second service traffic notification message is used to notify the network-side device of the second network that the data service traffic of the terminal is less than the service traffic threshold. When receiving the second service traffic notification message, the network-side device of the second network determines that the terminal does not have a service requirement of the second network.

The service request may include a network handover request, where the network handover request is used to request handover to the first network. When the service request including the network handover request is received, the terminal is determined to have no service requirement of the second network. In addition, the terminal may further include a second service traffic notification module. The second service traffic notification module is configured to send a second service traffic notification message to a network-side device of the first network when monitoring that the data service traffic of the terminal is less than the service traffic threshold, where the first service traffic notification message is used to notify the network-side device of the second network that the data service traffic of the terminal is less than the service traffic threshold. When receiving the second service traffic notification message, the network-side device of the first network determines that the terminal does not have a service requirement of the second network.

The second handover instruction receiving module 85 is configured to: when the terminal does not have a service requirement of the second network, receive a network handover instruction or a state transition instruction that is sent by the network-side device of the second network, where the network handover instruction includes configuration information of the first network and is used to instruct the terminal to hand over from the second network to the first network, and the state transition instruction is used to instruct the terminal to transit from a state of occupying a dedicated channel of the second network to a state of not occupying a dedicated channel of the second network.

After residing in the second network, the terminal provided in this embodiment of the present invention sends the service request to the network-side device of the second network through the second service requesting module 84 in the second network. When the network-side device of the second network monitors that the terminal does not have a service requirement of the second network, the second handover instruction receiving module 85 receives the network handover instruction that is sent by the network-side device of the second network and includes the configuration information of the first network, and the terminal hands over from the second network to the first network according to the instruction; therefore, the second network does not need to maintain the terminal that does not have a service requirement of the second network.

In all embodiments of the present invention, the "module" and "unit" may be a logical entity or a physical entity and can be achieved by a physical device, such as a processor, a chip, and the like.

FIG. 9 is a schematic structural diagram of a communications system according to an embodiment of the present invention. As shown in FIG. 9, the system includes a network-side device 91 of a first network, a network-side device 92 of a second network, and a terminal 93.

The network-side device 91 of the first network is configured to: when monitoring that a terminal in the first network has a service requirement of the second network, send a network handover instruction to the terminal for instructing the terminal to hand over from the first network to the first network, where the first network has a same coverage as the second network, an average data transmission rate of the second network is higher than an average data transmission rate of the first network, and all common physical channels or some common physical channels except a pilot channel in the second network are in disabled state.

For a function implemented by the network-side device 91 of the first network, reference may be made to the network-side device of the first network according to FIG. 6A to FIG. 6C.

The network-side device 92 of the second network is configured to: when monitoring that a terminal in the second network does not have a service requirement of the second network, send a network handover instruction including configuration information of the first network to the terminal or send a state transition instruction to the terminal for instructing the terminal to hand over from the second network to the first network, where the state transition instruction is used to instruct the terminal to transit from a state of occupying a dedicated channel of the second network to a state of not occupying a dedicated channel of the second network.

For a function implemented by the network-side device 92 of the second network, reference may be made to description of the embodiment corresponding to FIG. 7A to FIG. 7B.

The terminal 93 is configured to access the first network, initiate a service request in the first network, hand over from the first network to the second network after receiving the network handover instruction sent by the network-side device of the first network, and hand over from the second network to the first network after receiving the network handover instruction sent by the network-side device of the second network.

For a function implemented by the terminal 93, reference may be made to description of the embodiment corresponding to FIG. 8A to FIG. 8D.

Persons of ordinary skill in the art may understand that, all or a part of the steps of the foregoing method embodiments may be implemented by a program instructing relevant hardware. The foregoing programs may be stored in a computer readable storage medium. When the program runs, the foregoing steps included in the method embodiments are performed. The foregoing storage medium includes various media capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that, they may still make modifications to the technical solutions described in the foregoing embodiments, or make equivalent replacements to some technical features thereof, as long as these modifications or replacements do not cause the essence of corresponding technical solutions to depart from the scope of the technical solutions of the embodiments of the present invention.

## Claims

1. A communications method, comprising:
monitoring (11), by a first monitoring module (61) of a network-side communications device, whether a data service traffic of a terminal in a first network reaches a service traffic threshold, thereby determining whether the terminal in the first network has a service requirement of a second network, wherein the first network has a same coverage as the second network, an average data transmission rate of the second network is higher than an average data transmission rate of the first network, and all common physical channels or some common physical channels except a pilot channel in the second network are in disabled state; and
sending (12), by a first handover instructing module (62) of the network-side communications device, a network handover instruction comprising configuration information of the second network to the terminal if the data service traffic of the terminal reaches the service traffic threshold, wherein the network handover instruction is used to instruct the terminal to hand over from the first network to the second network.

2. The method according to claim 1, wherein the sending the network handover instruction comprising configuration information of the second network to the terminal if the terminal has the service requirement of the second network comprises:
sending, by a first measurement instructing unit (621) of the network-side communications device, a first measurement instruction if the terminal has the service requirement of the second network, wherein the first measurement instruction is used to instruct the terminal to measure signal quality of the second network; and
sending, by a first handover instructing unit (623) of the network-side communications device, the network handover instruction comprising the configuration information of the second network to the terminal if a first measurement report sent by the terminal is received, wherein the first measurement report is used to give a notification that the signal quality of the second network reaches a quality threshold.

3. The method according to claim 1 or 2, before the sending the network handover instruction comprising configuration information of the second network to the terminal, further comprising:
if a data service of the terminal is a dual-mode transmission service, sending by a service instruction module (63) of the network-side communications device, the terminal an instruction for releasing a packet switched service link; or
if a data service of the terminal is a packet switched service, sending by the service instruction module (63), a channel enabling instruction to a network-side device of the second network, wherein the channel enabling instruction is used to instruct the second network to enable a common physical channel in disabled state; and sending by the service instruction module (63) the terminal an instruction for releasing a temporary block flow.

4. A system comprising a network-side communications device, a terminal, a first network and a second network,
wherein the network-side communications device is configured to perform any of the methods according to claims 1 - 3.

## Patentansprüche

1. Kommunikationsverfahren, umfassend:
Überwachen (11), durch ein erstes Überwachungsmodul (61) einer netzwerkseitigen Kommunikationsvorrichtung, ob ein Datendienstverkehr eines Endgeräts in einem ersten Netzwerk einen Dienstverkehr-Schwellenwert erreicht, dadurch Bestimmen, ob das Endgerät in dem ersten Netzwerk eine Dienstanforderung eines zweiten Netzwerks aufweist, wobei das erste Netzwerk eine gleiche Abdeckung wie das zweite Netzwerk aufweist, eine durchschnittliche Datenübertragungsrate des zweiten Netzwerks höher ist als eine durchschnittliche Datenübertragungsrate des ersten Netzwerks und alle gemeinsamen physikalischen Kanäle oder einige gemeinsame physikalischen Kanäle außer einem Pilotkanal in dem zweiten Netzwerk in einem deaktivierten Zustand sind; und
Senden (12), durch ein erstes Übergabeanweisungsmodul (62) der netzwerkseitigen Kommunikationsvorrichtung, einer Netzwerkübergabeanweisung, umfassend Konfigurationsinformationen des zweiten Netzwerks, an das Endgerät, wenn der Datendienstverkehr des Endgeräts den Dienstverkehr-Schwellenwert erreicht, wobei die Netzwerkübergabeanweisung verwendet wird, das Endgerät anzuweisen, von dem ersten Netzwerk an das zweite Netzwerk zu übergeben.

2. Verfahren nach Anspruch 1, wobei das Senden der Netzwerkübergabeanweisung, umfassend Konfigurationsinformationen des zweiten Netzwerks, an das Endgerät, wenn das Endgerät die Dienstanforderung des zweiten Netzwerks aufweist, umfasst:
Senden, durch eine erste Messungsanweisungseinheit (621) der netzwerkseitigen Kommunikationsvorrichtung, einer ersten Messungsanweisung, wenn das Endgerät die Dienstanforderung des zweiten Netzwerks aufweist, wobei die erste Messungsanweisung verwendet wird, das Endgerät anzuweisen, eine Signalqualität des zweiten Netzwerks zu messen; und
Senden, durch eine erste Übergabeanweisungseinheit (623) der netzwerkseitigen Kommunikationsvorrichtung, der Netzwerkübergabeanweisung, umfassend die Konfigurationsinformationen des zweiten Netzwerks, an das Endgerät, wenn ein erster Messbericht, gesandt durch das Endgerät, empfangen wird, wobei der erste Messbericht verwendet wird, eine Benachrichtigung zu geben, dass die Signalqualität des zweiten Netzwerks einen Qualitätsschwellenwert erreicht.

3. Verfahren nach Anspruch 1 oder 2, vor dem Senden der Netzwerkübergabeanweisung, umfassend Konfigurationsinformationen des zweiten Netzwerks, an das Endgerät ferner umfassend:
wenn ein Datendienst des Endgeräts ein Doppelmodus-Übertragungsdienst ist, Senden, durch ein Dienstanweisungsmodul (63) der netzwerkseitigen Kommunikationsvorrichtung, dem Endgerät, einer Anweisung zum Freigeben einer paketvermittelten Dienstverknüpfung; oder
wenn ein Datendienst des Endgeräts ein paketvermittelter Dienst ist, Senden, durch das Dienstanweisungsmodul (63), einer Kanalaktivierungsanweisung an eine netzwerkseitige Vorrichtung des zweiten Netzwerks, wobei die Kanalaktivierungsanweisung verwendet wird, das zweite Netzwerk anzuweisen, einen gemeinsamen physikalischen Kanal im deaktivierten Zustand zu aktivieren;
und Senden, durch das Dienstanweisungsmodul (63), dem Endgerät, einer Anweisung zum Freigeben eines Flusses eines temporären Blocks.

4. System, umfassend eine netzwerkseitige Kommunikationsvorrichtung, ein Endgerät, ein erstes Netzwerk und ein zweites Netzwerk,
wobei die netzwerkseitige Kommunikationsvorrichtung konfiguriert ist, beliebige der Verfahren nach Anspruch 1-3 durchzuführen.

## Revendications

1. Procédé de communication, comprenant :
la surveillance (11), par un premier module de surveillance (61) d'un dispositif de communication côté réseau, si un trafic de service de données d'un terminal dans un premier réseau atteint un seuil de trafic de service, ce qui permet de déterminer si le terminal dans le premier réseau a besoin du service d'un second réseau, le premier réseau ayant une même couverture que le second réseau, un débit de transmission de données moyen du second réseau étant supérieur à un débit de transmission de données moyen du premier réseau, et tous les canaux physiques communs ou certains canaux physiques communs à l'exception d'un canal pilote dans le second réseau étant dans un état désactivé ; et
l'envoi (12), par un premier module d'instruction de transfert de réseau (62) du dispositif de communication côté réseau, d'une instruction de transfert de réseau comprenant des informations de configuration du second réseau au terminal si le trafic de service de données du terminal atteint le seuil de trafic de service, l'instruction de transfert de réseau étant utilisée pour indiquer au terminal d'effectuer le transfert du premier réseau au second réseau.

2. Procédé selon la revendication 1, l'envoi de l'instruction de transfert de réseau comprenant des informations de configuration du second réseau au terminal si le terminal a besoin du service du second réseau comprenant :
l'envoi, par une première unité d'instruction de mesure (621) du dispositif de communication côté réseau, d'une première instruction de mesure si le terminal a besoin du service du second réseau, la première instruction de mesure étant utilisée pour indiquer au terminal de mesurer la qualité de signal du second réseau ; et
l'envoi, par une première unité d'instruction de transfert (623) du dispositif de communication côté réseau, de l'instruction de transfert de réseau comprenant les informations de configuration du second réseau au terminal si un premier rapport de mesure envoyé par le terminal est reçu, le premier rapport de mesure étant utilisé pour donner une notification indiquant que la qualité de signal du second réseau atteint un seuil de qualité.

3. Procédé selon la revendication 1 ou 2, avant l'envoi de l'instruction de transfert de réseau, comprenant des informations de configuration du second réseau au terminal, comprenant en outre :
si un service de données du terminal est un service de transmission à double mode, l'envoi par un module d'instruction de service (63) du dispositif de communication côté réseau, au terminal d'une instruction pour libérer une liaison de service à commutation de paquets ; ou
si un service de données du terminal est un service à commutation de paquets, l'envoi par le module d'instruction de service (63), d'une instruction d'activation de canal à un dispositif côté réseau du second réseau, l'instruction d'activation de canal étant utilisée pour indiquer au second réseau d'activer un canal physique commun dans un état désactivé ; et l'envoi par le module d'instruction de service (63) au terminal d'une instruction de libération d'un flux de bloc temporaire.

4. Système comprenant un dispositif de communication côté réseau, un terminal, un premier réseau et un second réseau,
le dispositif de communication côté réseau étant configuré pour mettre en oeuvre l'un quelconque des procédés selon les revendications 1 à 3.
